# EUROPÄISCHE PATENTANMELDUNG

(11) **EP 2 426 006 A2**
(43) Veröffentlichungstag der Anmeldung: **07.03.2012**
(21) Anmeldenummer: 11180276.5
(22) Anmeldetag: 06.09.2011
(51) Int. Cl.: B60L 11/18, H02J 7/00

(54) **Verfahren zum Einspeisen von elektrischer Energie in einen Energiespeicher eines elektrisch betreibbaren Fahrzeugs**

(30) Priorität: 07.09.2010 DE 102010044576; 19.04.2011 DE 102011007690
(71) Anmelder: Elektro-Bauelemente GmbH, 44536 Lünen (DE)
(72) Erfinder: Kachouh, Checrallah, 44227 Dortmund (DE)

(57) **Zusammenfassung**

Die Erfindung betrifft ein Verfahren zur Einspeisung von elektrischer Energie in einen Energiespeicher eines elektrisch betreibbaren Fahrzeugs mittels einer elektrische Energie bereitstellenden stationären Ladestation, wobei ein Nutzer der Ladestation eine Initialisierungsnachricht enthaltend eine den Nutzer identifizierende Nutzerkennung und eine die Ladestation identifizierende Ladestationenkennung an eine Serviceeinheit eines Betreibers der Ladestation sendet, nach der Identifikation des Nutzers und der Ladestation von der Serviceeinheit ein die erfolgreiche Initialisierung bestätigendes Bestätigungssignal von der Serviceeinheit an die Ladestation gesendet wird zur Freigabe der Ladestation, der Nutzer die Ladestation und den Energiespeicher des Fahrzeugs über ein Ladekabel mechanisch und/oder elektrisch verbindet, nach der Verbindung von Fahrzeug und Ladestation und nach Empfang des Bestätigungssignals durch die Ladestation ein den Beginn des Ladevorgangs kennzeichnendes Startsignal von der Ladestation an die Serviceeinheit gesendet wird und zur Durchführung eines Ladevorgangs eine elektrische Ladespannung angelegt und der Energiespeicher mit dem Ladestrom geladen wird und der Nutzer zur Abrechnung des Ladevorgangs mit einer Ladegebühr belastet wird, wobei der Nutzer zur Festlegung einer Höchstgrenze der Ladegebühr eine die Höchstgrenze der Ladegebühr spezifizierende Ladegebührenkennung an die Serviceeinheit sendet und dass der Ladevorgang unterbrochen und/oder beendet wird, sobald die Höchstgrenze der Ladegebühr erreicht und/oder überschritten ist.

## Beschreibung

Die Erfindung betrifft ein Verfahren zur Einspeisung von elektrischer Energie in einen Energiespeicher eines elektrisch betreibbaren Fahrzeugs mittels einer elektrische Energie bereitstellenden stationären Ladestation, wobei ein Nutzer der Ladestation eine Initialisierungsnachricht enthaltend eine den Nutzer identifizierende Nutzerkennung und eine die Ladestation identifizierende Ladestationenkennung an eine Serviceeinheit eines Betreibers der Ladestation sendet, nach der Identifikation des Nutzers und der Ladestation von der Serviceeinheit ein die erfolgreiche Initialisierung bestätigendes Bestätigungssignal von der Serviceeinheit an die Ladestation gesendet wird zur Freigabe der Ladestation, der Nutzer die Ladestation und den Energiespeicher des Fahrzeugs über ein Ladekabel mechanisch und/oder elektrisch verbindet, nach der Verbindung von Fahrzeug und Ladestation und nach Empfang des Bestätigungssignals durch die Ladestation ein den Beginn des Ladevorgangs kennzeichnendes Startsignal von der Ladestation an die Serviceeinheit gesendet wird zur Durchführung eines Ladevorgangs eine elektrische Ladespannung angelegt und der Energiespeicher mit dem Ladestrom geladen wird und der Nutzer zur Abrechnung des Ladevorgangs mit einer Ladegebühr belastet wird.

Aus der WO 2009/098687 A2 ist ein Verfahren zum Speisen eines Energiespeichers eines elektrisch betreibbaren Fahrzeugs mit elektrischer Energie bekannt. Hierbei wird der Energiespeicher des elektrisch betreibbaren Fahrzeugs über ein Ladekabel mit einer elektrische Energie bereitstellenden Ladestation elektrisch leitend verbunden. Die Ladestation bezieht die elektrische Energie aus dem öffentlichen Energienetz, mit dem die Ladestation zu diesem Zweck über eine in der Regel unterirdisch verlegte Energieleitung verbunden ist. Um die Ladestation nutzen zu können, meldet sich ein Nutzer bei einer der Ladestation zugeordneten Serviceeinheit eines Betreibers der Ladestation an. Im Rahmen der Anmeldung übersendet der Nutzer eine ihn eindeutig identifizierende Nutzerkennung sowie eine die Ladestation eindeutig identifizierende Ladestationenkennung mittels einer über ein Mobiltelefon gesendeten Initialisierungsnachricht an die Serviceeinheit. Die Serviceeinheit, welche ihrerseits mit einer Vielzahl von demselben Betreiber unterhaltenen Ladestationen informationstechnisch verbunden ist, erkennt anhand der Ladestationenkennung, welche Ladestation für den Ladevorgang bereitgestellt werden soll und gibt diese frei, sobald die Ladestation über das Ladekabel elektrisch mit dem Energiespeicher des Fahrzeugs verbunden ist und der Nutzer anhand der Nutzerkennung identifiziert ist. Anhand der Nutzerkennung wird von der Serviceeinheit ermittelt, in welcher Weise die in den Energiespeicher des Fahrzeugs eingespeiste Energiemenge gegenüber dem Nutzer abgerechnet wird. Der Abrechnung wird hierbei beispielsweise die jeweils eingespeiste Energiemenge oder die Dauer des Ladevorgangs zugrunde gelegt. Nachteilig hierbei ist, dass der Nutzer keine oder nur eine begrenzte Kontrolle über die Kosten des Ladevorgangs ausüben kann. Der Ladevorgang wird erst beendet, wenn der Energiespeicher des Fahrzeugs vollständig geladen ist oder der Nutzer den Ladevorgang manuell abbricht. Darüber hinaus setzt sich der Betreiber der Ladestation dem Risiko aus, dass der Nutzer die dem Ladevorgang nachgelagerte Bezahlung der Energiemenge verzögert bzw. ganz oder teilweise verweigert.

Aufgabe der vorliegenden Erfindung ist es daher, ein Verfahren zur Einspeisung von elektrischer Energie in einen Energiespeicher eines elektrisch betreibbaren Fahrzeugs derart weiterzubilden, dass der Ladevorgang weiter vereinfacht wird und der Nutzer die vollständige Kontrolle über den Ladevorgang erhält. Zudem soll der Betreiber der Ladestation zuverlässig vor Missbrauch und Manipulation geschützt werden.

Zur Lösung der Aufgabe ist in Verbindung mit dem Oberbegriff des Patentanspruchs 1 dadurch gekennzeichnet, dass der Nutzer zur Festlegung einer Höchstgrenze der Ladegebühr eine die Höchstgrenze der Ladegebühr spezifizierende Ladegebührenkennung an die Serviceeinheit sendet und dass der Ladevorgang unterbrochen und/oder beendet wird, sobald die Höchstgrenze der Ladegebühr erreicht und/oder überschritten ist.

Der besondere Vorteil der Erfindung besteht darin, dass der Nutzer die Kosten des Ladevorgangs bereits vor Beginn desselben begrenzen kann und die vollständige Kostenkontrolle erhält. Der Nutzer ist damit vor unliebsamen Überraschungen in Bezug auf die Höhe der durch den Ladevorgang verursachten Kosten geschützt. Durch die Übersendung einer Ladegebührenkennung, die eine Kostenobergrenze der Ladegebühr spezifiziert und vom Nutzer selbst festgelegt werden kann, erhält der Nutzer beispielsweise die Möglichkeit, die in einen Energiespeicher seines elektrisch betreibbaren Fahrzeugs einzuspeisende Energiemenge und/oder die Ladezeit definiert vorauszubestimmen. Ein Ladevorgang wird in diesem Fall nach Erreichen der Höchstgrenze der Ladegebühr (insbesondere nach Erreichen der spezifizierten Energiemenge oder Ladezeit) selbsttätig ausgesetzt, das heißt vollständig beendet oder zumindest zeitweise unterbrochen. Sofern der Ladevorgang nicht vollständig beendet, sondern lediglich unterbrochen wird und das Fahrzeug mit der Ladestation verbunden ist, besteht für den Nutzer die Möglichkeit, den Ladevorgang erneut in Gang zu setzen. In diesem Fall instruiert der Nutzer den Betreiber der Ladestation beispielsweise durch Übersendung einer neuen Initialisierungsnachricht an die Serviceeinheit entsprechend.

Um eine Fehlübermittlung zu vermeiden und die Sicherheit zu erhöhen, kann die Ladegebührenkennung nach dem Empfang der Initialisierungseinheit durch die Serviceeinheit von dieser an den Nutzer zurück übertragen werden zur Verifikation der Ladegebührenkennung. Erst nachdem der Nutzer die Ladegebührenkennung bestätigt hat, wird das Bestätigungssignal an die Ladestation gesandt.

Als Nutzerkennung kann beispielsweise eine einem registrierten Nutzer zugeordnete Identifikationsnummer oder ein sonstiges personenbezogenes und nur einmal vergebenes Zeichen, insbesondere eine (Mobil-)Telefonnummer, eine Sozialversicherungsnummer, eine Steuernummer oder dergleichen verwendet werden. Als Ladestationenkennung kann ebenfalls eine einmalige, sichtbar auf der Ladestation angebrachte oder in einem Display derselben angezeigte Identifikationsnummer dienen. Beispielsweise kann die Ladestationenkennung als eine Telefonnummer ausgebildet sein, unter der der Nutzer die Serviceeinheit des Betreibers kontaktieren kann. Die als Ladestationenkennung dienende Telefonnummer ist in diesem Fall ebenfalls nur einmal vergeben, so dass die Ladestation durch die Telefonnummer eindeutig bestimmt ist. Als Ladestationenkennung kann ebenfalls eine Ortskoordinate der Ladestation dienen, die beispielsweise mittels eines Navigationsgeräts oder eines die entsprechende Funktionalität (insb. GPS-Funktion) aufweisenden mobilen Kommunikationsgeräts (insb. Mobiltelefon, Notebook, Bordcomputer des Fahrzeugs) ermittelt und mit der Initialisierungsnachricht an die Serviceeinheit überträgt. Die Übertragung kann beispielsweise automatisch erfolgen. Beispielsweise kann eine Software-Applikation zur Bestimmung und Übertragung der Ortskoordinaten genutzt werden.

Zur Verbindung der Ladestation mit dem Fahrzeug kann ein Ladekabel verwendet werden, welches an seinen beiden freien Enden Steckelemente aufweist. Ein erstes Steckelement wird mit einem Gegensteckelement der Ladestation und ein zweites Steckelement mit einem dem Energiespeicher des Fahrzeugs zugeordneten Gegensteckelement mechanisch und elektrisch leitend verbunden. Derartige Ladekabel werden üblicherweise in dem elektrisch betreibbaren Fahrzeug mitgeführt und sind Eigentum des Nutzers bzw. Fahrzeughalters. Alternativ kann das Ladekabel fester Bestandteil der Ladestation sein. In diesem Fall wird das Ladekabel aus dem Gehäuse der Ladestation herausgeführt und weist an seinem einzigen freien Ende das Steckelement der Ladestation auf, welches an das mit dem Energiespeicher verbundenes Gegensteckelement des Fahrzeugs angesetzt wird zur mechanischen und elektrischen Verbindung von Ladestation und Fahrzeug. Insbesondere bei Heimladestationen bzw. nicht oder nur eingeschränkt öffentlich zugänglichen Ladestationen sind letztgenannte Lösungen häufig zu finden.

Mit der Durchführung des Ladevorgangs wird nach der Erfindung erst begonnen, nachdem ein von der Serviceeinheit an die Ladestation gesendetes, die Durchführung des Ladevorgangs autorisierende Bestätigungs- bzw. Freigabesignal empfangen wurde und der Energiespeicher des Fahrzeugs elektrisch und/oder mechanisch mit der Ladestation verbunden ist. Dieser doppelte Abfragemechanismus verbessert die Sicherheit des Verfahrens und schützt den Nutzer und den Betreiber der Ladestation vor Missbrauch bzw. Manipulation. Zugleich wird hierdurch sichergestellt, dass ein mitunter von außen zugänglich in der Ladestation angeordnetes Gegensteckelement (Steckdose) bei Nichtverwendung der Ladestation spannungsfrei ist. Hierdurch verbessert sich die Sicherheit weiter. Insbesondere werden spielende Kinder, unachtsame Personen oder Tiere bei nichtbeabsichtigtem Kontakt oder Verkennung der von einem Kontakt mit der Spannung stehenden Steckdose ausgehenden Gefahr zuverlässig geschützt.

Als eine zusätzliche Sicherungsmaßnahme kann das Gegensteckelement bei Nichtverwendung der Ladestation unzugänglich in derselben angeordnet sein. Hierzu kann das Gegensteckelement beispielsweise hinter einem verriegelten Verschlusselement verdeckt angeordnet werden. Die Verriegelung des Verschlusselementes wird hierbei erst aufgehoben, wenn der Nutzer identifiziert bzw. das Bestätigungssignal an die Ladestation versendet ist. Ebenfalls kann das Gegensteckelement beweglich in der Ladestation angeordnet werden. In diesem Fall wird das Gegensteckelement erst nach der Identifikation des Nutzers bzw. der Übersendung des Bestätigungssignals an die Ladestation aus einer Nichtverwendungsstellung, in der das Gegensteckelement unzugänglich in dem Gehäuse der Ladestation angeordnet ist, in eine Verwendungsstellung verbracht, in der das Gegensteckelement zugänglich in der Ladestation angeordnet ist und der Energiespeicher des Fahrzeugs über das Ladekabel mit der Ladestation verbunden werden kann.

Als eine weitere Sicherungsmaßnahme kann vorgesehen werden, dass Steckelement vor dem Beginn des Ladevorgangs in dem Gegensteckelement verriegeln. Hierdurch wird bewirkt, dass sich das Steckelement während des Ladevorgangs weder absichtlich noch versehentlich aus dem Gegensteckelement entnehmen lässt. Stattdessen wird das Steckelement nach Beendigung des Ladevorgangs und vor der Entnahme desselben aus dem Gegensteckelement entriegelt.

Die Ladegebühr kann beispielsweise einer EC-, Geld- oder Kreditkarte des Nutzers belastet wird. Zur Kartenabbuchung kann an der Ladestation ein Kartenlesegerät vorgesehen sein, in welches der Nutzer die jeweilige Karte vor Beginn des Ladevorgangs einführt. Denkbar ist beispielsweise auch, dass der Betreiber der Ladestation oder eine von ihm bevollmächtigte Institution dem Nutzer eine Rechnung stellt, beziehungsweise dass die Ladegebühr von einem Guthabenkonto, welches der Nutzer bei dem Betreiber oder einer anderen Institution einrichtet, abbucht.

Nach einer bevorzugten Ausführungsform der Erfindung sendet der Nutzer als Ladegebührenkennung eine Geldbetragsangabe, ein zu einem Geldbetrag korrespondierendes Kürzel, eine zu einer in den Energiespeicher des Fahrzeugs einzuspeisenden Energiemenge korrespondierenden Wertzahl und/oder eine Zeitangabe, welche eine Zeitobergrenze des Ladevorgangs spezifiziert, an die Serviceeinheit. Vorteilhaft vereinfacht sich hierdurch die Handhabung des Verfahrens. Sofern die Ladegebührenkennung als Geldbetragsangabe (z.B. 0,50 €, 1,00 €, 1,50 € ...) ausgebildet ist, sind dem Nutzer die Kosten des Ladevorgangs sofort und unmittelbar klar. Der Nutzer ist vor einer Fehlinterpretation der Ladegebührenkennung besonders zuverlässig geschützt. Wird als Ladegebührenkennung ein zu einem Geldbetrag korrespondierendes Kürzel übersendet (zum Beispiel A für 0,50 €, B für 1,00 €, C für 1,50 €, ...), so verkürzt sich die Eingabe der Ladegebührenkennung. Auf der Ladestation selbst kann beispielsweise eine Gegenüberstellung der zulässigen Kürze und der hierdurch spezifizierten Geldbeträge angeordnet sein. Die Spezifikation einer Höchstdauer des Ladevorgangs erlaubt es dem Nutzer, die voraussichtliche Dauer seiner Abwesenheit möglicht vollständig zum Aufladen des Fahrzeugs zu nutzen, ohne dass er die Dauer der Abwesenheit in einen Geldbetrag oder eine Energiemenge umrechnen muss.

Nach einer Weiterbildung der Erfindung wird die Ladegebührenkennung als ein weiterer Teil der Initialisierungsnachricht von dem Nutzer an die Serviceeinheit gesendet. Vorteilhaft können hierdurch alle zur Initialisierung des Ladevorgangs erforderlichen Daten in einer gemeinsamen Nachricht übermittelt werden. Die Handhabung der Ladestation vereinfacht sich.

Nach einer Weiterbildung der Erfindung wird zur Bestimmung der in den Energiespeicher des Fahrzeugs eingespeisten Energiemenge die Dauer des Ladevorgangs gemessen. Vorteilhaft ist die Messung der Zeit einfacher als eine Energiemengenmessung. Darüber hinaus vereinfacht sich die Abrechnung des Ladevorgangs gegenüber dem Nutzer insbesondere für den Fall, dass als Ladegebührenkennung eine Zeiteinheit (Zeitobergrenze für den Ladevorgang) spezifiziert ist.

Um die Energiemenge anhand der Dauer des Ladevorgangs mit hinreichender Genauigkeit bestimmen und gegenüber dem Nutzer abrechnen zu können, muss bekannt sein, bei welcher elektrischen Ladespannung und mit welchem Ladestrom der Energiespeicher des Fahrzeugs gespeist wird. Spannung und Strom können hierbei abhängig vom Fahrzeugtyp variieren. Heute üblich ist beispielsweise ein Ladestrom von 16 Ampere bei einer Ladespannung von 230 V oder ein Ladestrom von 32 Ampere bei einer Ladespannung von 400 V. Gleichwohl ist vorstellbar, den Energiespeicher des Fahrzeugs mit jeder anderen Kombination von Ladespannung und Ladestrom zu speisen. Die Betriebsparameter (Ladestrom und Ladespannung) können hierbei entweder durch die elektrischen Betriebsparameter der Ladestation begrenzt sein oder durch die Ladestation an die fahrzeugseitig zulässigen Paramter angepasst werden. Für beide Fälle sind dem Fachmann heute Lösungen bekannt, um die Betriebsparameter automatisch zu erfassen und einen korrekten Ladevorgang sicherzustellen. In Kenntnis der Betriebsparameter ist es einfach aus der Dauer des Ladevorgangs auf die in den Energiespeicher des Fahrzeugs eingespeiste Energiemenge zu schließen. Die eingespeiste Energiemenge kann somit ohne Energiemengenmessung hinreichend genau bestimmt und gegenüber dem Nutzer abgerechnet werden.

Nach einer Weiterbildung der Erfindung kann eine Unterbrechung bzw. Beendigung des Ladevorgangs beim Erreichen der Höchstgrenze der Ladegebühr herbeigeführt werden, indem nach Ablauf eines zu der Höchstgrenze der Ladegebühr korrelierenden Ladezeitintervalls, welches mit dem Beginn des Ladevorgangs startet, ein Stoppsignal von der Serviceeinheit an die Ladestation gesendet wird. Ferner kann eine Beendigung und/oder Unterbrechung des Ladevorgangs herbeigeführt werden, indem die Ladegebührenkennung selbst oder eine zu der Höchstgrenze der Ladegebühr korrelierende Wertangabe vor der Durchführung des Ladevorgangs von der Serviceeinheit an eine Steuereinheit der Ladestation gesendet wird, wobei das Stoppsignal auf Basis der Ladegebührenkennung oder der Wertangabe von der Steuereinheit der Ladestation selbst bestimmt wird. Weiterhin kann der Ladevorgang beendet und/oder unterbrochen werden, indem die Ladestation während des Ladevorgangs Informationen über die in den Energiespeicher des Fahrzeugs eingespeiste Energiemenge an die Serviceeinheit sendet, die Informationen von der Serviceeinheit verarbeitet und mit der die Höchstgrenze der Ladegebühr spezifizierenden Ladegebührenkennung vergleicht und beim Erreichen oder Überschreiten der Höchstgrenze das Stoppsignal von der Serviceeinheit an die Ladestation gesendet wird zur Beendigung und/oder Unterbrechung des Ladevorgangs. Das Verfahren gestaltet sich besonders einfach, wenn das Stoppsignal nach Ablauf des Ladezeitintervalls in der Serviceeinheit generiert und von dieser an die Ladestation gesendet wird. Sofern das Stoppsignal von der Ladestation selbst erzeugt wird, kann die Ladestation nach Empfang der Ladegebührenkennung bzw. der zu dieser korrespondierenden Wertangabe weitgehend autonom und ohne Interaktion mit der Serviceeinheit agieren. Als zu der Höchstgrenze der Ladegebühr korrelierende Wertangabe kann beispielsweise ein Zeitintervall dienen. Sofern die Ladestation während des Ladevorgangs Informationen über den aktuellen Status des Ladevorgangs an die Serviceeinheit sendet, fungiert die Serviceeinheit als eine Zentraleinheit, in der alle Informationen zusammenlaufen. Vorteilhaft bietet sich hierdurch die Möglichkeit, etwaige Unregelmäßigkeiten frühzeitig zu erkennen und den Ladevorgang detailliert zu überwachen. Da direkt bei Beendigung des Ladevorgangs alle Informationen zentral in der Serviceeinheit vorliegen, vereinfacht sich darüber hinaus die Abrechnung des Ladevorgangs gegenüber dem Nutzer.

Nach einer Weiterbildung der Erfindung sendet der Nutzer von einem mobilen Kommunikationsgerät eine Sprachnachricht und/oder eine Textnachricht als Initialisierungsnachricht an die Serviceeinheit. Vorteilhaft bietet das Vorsehen eines mobilen Kommunikationsgeräts eine maximale Flexibilität. Als mobiles Kommunikationsgerät können beispielsweise ein Mobiltelefon, ein in dem Fahrzeug angeordneter Bordcomputer, ein Notebook oder dergleichen Verwendung finden. Sprachnachrichten können beispielsweise mittels des Mobiltelefons in besonders einfacher Weise gesendet werden. Textnachrichten können ebenfalls mittels Mobiltelefon (SMS), Smartphone oder Rechner (E-Mail) versendet werden. Auf Seiten der Ladestation kann hierbei auf separate Bedienelemente zur Eingabe der Benutzerkennung bzw. der Ladegebührenkennung verzichtet werden. Hierdurch reduzieren sich die Kosten für die Ladestation. Zugleich wird Missbrauch und Vandalismus vorgebeugt.

Nach einer Weiterbildung der Erfindung wird vor der Durchführung des Ladevorgangs von der Serviceeinheit ein Geldbetrag, welcher zur Höchstgrenze der Ladegebühr korrespondiert, auf einem Mobilfunkkonto des Nutzers, welches dieser bei einem Mobilfunkbetreiber unterhält, reserviert. Beim Start des Ladevorgangs und/oder nach der Unterbrechung bzw. Beendigung des Ladevorgangs wird ein zu der in dem Energiespeicher des Fahrzeugs eingespeisten Energiemenge und/oder zu der Ladezeit korrelierender Rechnungsbetrag dem Mobilfunkkonto des Nutzers belastet. Vorteilhaft gestaltet sich hierdurch die Abrechnung des Ladevorgangs einfach, schnell und transparent. Der Nutzer erhält die maximale Kostenkontrolle. Zugleich kann er bei Verwendung eines Prepaid-Kartenkontos eine maximale Kostenobergrenze durch den Aufladebetrag selbst bestimmen. Indem der Betreiber vor Durchführung des Ladevorgangs den zu der Höchstgrenze der Ladegebühr korrelierenden Geldbetrag auf dem Mobilfunkkonto des Nutzers reserviert und nach Beendigung den Rechnungsbetrag dem Mobilfunkkonto des Nutzers belastet, ist die Bezahlung des Rechnungsbetrags sichergestellt und der Betreiber der Ladestation gegen Missbrauch, insbesondere Nichtbezahlung des Rechnungsbetrags geschützt. Der Rechnungsbetrag entspricht bei Ausschöpfung der Höchstgrenze der Ladegebühr dem reservierten Geldbetrag oder ist bei einem vorzeitigen Abbruch des Ladevorgangs geringer als der reservierte Geldbetrag. Darüber hinaus kann bei dieser Abrechnung auf eine vorherige Registrierung des Nutzers beim Betreiber der Ladestation verzichtet werden. Somit ist es dem Nutzer möglich, auch Ladestationen fremder Betreiber zu nutzen. Dies vereinfacht das Laden des Energiespeichers insbesondere während des Urlaubs oder im Ausland. Der Nutzer kann vom Betreiber der Ladestation nach der Durchführung des Ladevorgangs und der Belastung des Rechnungsbetrags auf dem Mobilfunkkonto des Nutzers eine Gebührennachricht erhalten, in der der Rechnungsbetrag und/oder die Dauer des Ladevorgangs und/oder die in den Energiespeicher eingespeiste Energiemenge angegeben sind.

Nach einer Weiterbildung der Erfindung wird während der Dauer des Ladevorgangs mittels einer Anzeigeeinheit ein die Durchführung des Ladevorgangs kenntlich machendes Ladesignal an der Ladestation angezeigt. Als Anzeigeeinheit kann beispielsweise ein Statuslicht, eine LED-Anzeige oder ein Display dienen. Vorteilhaft erhält der Nutzer durch die Statusanzeige Rückmeldung über den Beginn und die Fortdauer des Ladevorgangs. Die Anzeigeeinheit kann beispielsweise von der Steuereinheit der Ladestation und/oder von der Serviceeinheit betätigbar sein und der Ladestation zugeordnet sein. Beispielsweise kann als Anzeigeeinheit das Display des mobilen Kommunikationsgerätes des Nutzers dienen. In diesem Fall kann der Nutzer beispielsweise durch einen Blick auf sein Handy-Display feststellen, ob der Ladevorgang in Gang oder unterbrochen oder beendet ist.

Nach einer Weiterbildung der Erfindung wird dem Nutzer zusätzlich zu der Ladegebühr für das Abstellen des Fahrzeugs eine Parkgebühr berechnet, wobei eine erste Zeitperiode, für die die Parkgebühr berechnet wird, von einer zweiten Zeitperiode abweichen kann, für die die Ladegebühr berechnet wird. Vorteilhaft bietet sich hierdurch die Möglichkeit, das Laden des Energiespeichers des Fahrzeugs auf öffentlichen Parkplätzen mit dem Geschäftsmodell eines Parkplatzbetreibers zu kombinieren. Beispielsweise können die Ladegebühr und Parkgebühr gleichzeitig anfallen und je angefangener Zeiteinheit abgerechnet werden. Die Ladegebühr kann hierbei beispielsweise von der Dauer des Ladevorgangs und den Betriebsparametern (elektrische Spannung und Ladestrom) abhängt. Die Höhe der Parkgebühr kann individuell von einem Betreiber des Parkplatzes festgelegt werden. Die Ladegebühr wird hierbei erhoben, so lange der Energiespeicher des Fahrzeugs über das Ladekabel mit der Ladestation verbunden ist. Ebenfalls ist möglich, dass die Parkgebühr völlig unabhängig vom Ladevorgang während der Bewirtschaftungszeiten des Parkplatzes, beispielsweise in der Zeit von 8 Uhr bis 19 Uhr an Werktagen anfällt. Durch eine zusätzliche Anzeigeeinheit an der Ladestation kann hierbei kenntlich gemacht werden, dass eine Parkgebühr für eine der Ladestation zugeordnete Parkbucht anfällt und/oder bezahlt wurde. Beispielsweise ist denkbar, dass der Nutzer eine Ordnungswidrigkeit begeht bzw. das Fahrzeug des Nutzers abgeschleppt wird, wenn eine der Ladestation zugeordnete Parkbucht belegt wird und die Zahlung der Parkgebühr nicht mittels der weiteren Anzeigeeinheit angezeigt wird. Da der Serviceeinheit das Ende des Ladevorgangs bekannt ist und aufgrund der elektrisch-mechanischen Verbindung von Fahrzeug und Ladestation detektiert werden kann, ob das Fahrzeug nach Beendigung des Ladevorgangs weiter in der der Ladestation zugeordneten Parkbucht geparkt wird, kann gegebenenfalls nach Ablauf eines vordefinierten Karenzzeitintervalls ein Dritter auf das unberechtigt parkende Fahrzeug aufmerksam gemacht werden. Beispielsweise kann eine Nachricht mit einer entsprechenden Information an einen Nutzer gesendet werden, der die der Parkbucht zugeordnete Ladestation reserviert hat. Beispielsweise kann die Polizei oder ein anderer Ordnungsdienst informiert werden. Es ist dann möglich, das Fahrzeug abzuschleppen oder den Nutzer schriftlich zu verwarnen, indem der Parkverstoß mit einem "Knöllchen" bzw. "Strafzettel" geahndet wird.

Nach einer Weiterbildung der Erfindung werden die Standorte von Ladestationen in einem Navigationsgerät angezeigt. Bei der Anzeige der Standorte in dem Navigationsgerät wird für jede Ladestation separat kenntlich gemacht, ob diese aufgrund eines aktuell durchgeführten und/oder bevorstehenden Ladevorgangs belegt ist. Vorteilhaft bietet sich hierbei dem Nutzer die Möglichkeit, frühzeitig den Standort freier Ladestationen zu bestimmen und diese zielgenau anzufahren. Beispielsweise kann der Standort einer freien Ladestation als Zieladresse in das Navigationsgerät übernommen und die Ladestation direkt angefahren werden.

Als Navigationsgeräte im Sinne der Erfindung dienen auch Navigationsgeräte ohne Zielführung, beispielsweise interaktive Kartendienste im Internet, bei denen der Standort von Ladestationen sowie deren Betriebszustand angezeigt werden, und Routenplandienste, welche geeignet sind, eine Fahrstrecke von einem Startpunkt zu einem Zielpunkt zu bestimmen. Hierbei kann insbesondere der Standort der Ladestation als Zielpunkt gewählt werden. Die Navigationsdienste können demzufolge über spezielle Navigationsgeräte genutzt werden, welche als transportable Navigationsgeräte ausgebildet sein können oder stationär im Fahrzeug integriert sein können. Ebenso können stationäre bzw. mobile Computer zur Nutzung der Navigationsdienste dienen.

Nach einer Weiterbildung der Erfindung übersendet der Nutzer zur Reservierung einer in dem Navigationsgerät angezeigten, nicht belegten und von dem Nutzer ausgewählten Ladestation eine Reservierungsnachricht enthaltend die Benutzerkennung und die Ladestationenkennung sowie optional die Ladegebührenkennung an die Serviceeinheit. Von der Serviceeinheit wird eine Sperrnachricht an die Ladestation gesendet. Optional kann die Anzeigeeinheit der Ladestation ein die Reservierung der Ladestation kenntlich machendes Sperrsignal anzeigen. In dem Navigationsgerät wird die von dem Nutzer ausgewählte Ladestation aufgrund des bevorstehenden Ladevorgangs als belegt kenntlich gemacht. Dem Nutzer kann für ein Reservierungszeitintervall zwischen der Reservierung der Ladestation und dem Beginn der Durchführung des Ladevorgangs die Parkgebühr und/oder eine Reservierungsgebühr berechnet werden. Vorteilhaft hat der Nutzer die Möglichkeit, eine einmal ausgewählte und als Ziel in das Navigationsgerät eingelesene Ladestation zur reservieren. Hierdurch ist sichergestellt, dass die Ladestation nicht zwischenzeitlich von einem anderen Nutzer belegt wird. Andere Nutzer werden die Ladestation in ihrem Navigationsgerät als belegt gekennzeichnet vorfinden, so dass diese die Ladestation nicht als Ziel auswählen. Unnötiger Suchverkehr, insbesondere in Innenstadtlagen oder in entlegenen ländlichen Gebieten, an denen nur wenige Ladestationen zu finden sind, wird hierdurch vermieden.

Nach einer Weiterbildung der Erfindung sendet der Nutzer nach Erreichen der von ihm reservierten Ladestation die Initialisierungsnachricht oder eine Aktivierungsnachricht an die Serviceeinheit, wobei von der Serviceeinheit nach Erhalt der Aktivierungsnachricht das Bestätigungssignal an die Ladestation gesendet und die nachfolgenden Verfahrensschritte ausgelöst werden. Vorteilhaft kann der Nutzer eine reservierte Ladestation in besonders einfacher Weise nutzen. Insbesondere kann er statt der erneuten Übersendung der Nutzerkennung und der Ladestationenkennung (Initialisierungsnachricht) eine Aktivierungsnachricht an die Serviceeinheit senden. Die Ladegebührenkennung kann wahlweise mit der Initialisierungsnachricht oder der Aktivierungsnachricht übermittelt werden. Die Übermittlung der Ladegebührenkennung mit der Initialisierungsnachricht hat den Vorteil, dass bei einer Reservierung und vor Beginn eines konventionellen Ladevorgangs eine exakt gleiche Initialisierungsnachricht an die Serviceeinheit übersandt wird. Für den Nutzer vereinfacht sich hierdurch die Handhabung der Ladestation. Die Übersendung der Ladegebührenkennung mittels der Aktivierungsnachricht hat den Vorteil, dass der Nutzer die zur Verfügung stehende Ladezeit, welche Gegenstand der Ladegebührenkennung sein kann, nach Ankunft an der Ladestation vergleichsweise exakt festlegen kann. Ein Abschätzen der Ladezeit bereits zum Zeitpunkt der Reservierung der Ladestation kann hingegen fehleranfällig sein, da sich die Anreise beispielsweise durch Stau, einen Defekt am Fahrzeug oder dergleichen verzögern kann. Die Aktivierungsnachricht kann beispielsweise als eine Antwortnachricht auf eine Reservierungsbestätigungsnachricht ausgebildet sein, mittels derer die Kennung der Ladestation durch den Nutzer von der Serviceeinheit bestätigt wird.

Nach einer Weiterbildung der Erfindung bleibt die elektrische Ladespannung auf ein Steuersignal hin oder nach der Unterbrechung bzw. Beendigung des Ladevorgangs und bis zum Empfang eines endgültigen Beendigungssignals angelegt. Der Ladestrom wird auf eine niedrige Stufe abgesenkt. Vorteilhaft kann durch dieses Vorgehen der Energiespeicher bzw. das Fahrzeug vorkonditioniert werden. Beispielsweise kann der Fahrzeuginnenraum oder die Batterie temperiert werden, indem die hierzu erforderliche Energie nicht der Fahrzeugbatterie entnommen wird, sondern von der Ladestation bereitgestellt wird. Hierdurch ist sichergestellt, dass der Energiespeicher nach dem Beginn der Fahrt den gewünschten Ladegrad aufweist. Ebenfalls kann vermieden werden, dass gleich zu Beginn der Fahrt eine große Menge Energie aus dem Energiespeicher entnommen werden muss, um den Fahrzeuginnenraum zu kühlen bzw. zu heizen. Indem der Ladestrom auf ein Steuersignal der Serviceeinheit hin abgesenkt - und zu einem späteren Zeitpunkt unter Umständen wieder erhöht - wird, besteht die Möglichkeit zu einem Lastmanagement. Beispielsweise kann der Ladestrom nach einem vordefinierten Schema gesenkt werden (Reduzierung nach 2 Std. Ladezeit oder morgens in der Zeit von 6.00 bis 8.00 Uhr). Ferner kann die Ladegebühr über die Zeit variieren, das heißt zum Beispiel kann das Laden mit Nachtstrom günstig sein mit der Folge, dass der Ladestrom zu Hochpreiszeiten abgesenkt wird.

Nach einer Weiterbildung der Erfindung erhält der Nutzer von der Serviceeinheit bzw. der Ladestation eine Ausfallnachricht, wenn der Ladevorgang unvorhergesehen bzw. ungeplant unterbrochen wird. Beispielsweise beim Fall eines FI-Schutzschalters und der resultierenden Unterbrechung des Ladestroms wird der Nutzer entsprechend informiert und kann frühzeitig handeln. Er erlebt somit am nächsten Morgen keine böse Überraschung.

Nach einer Weiterbildung der Erfindung wird einem ersten Nutzer der Ladestation nach dem Erreichen bzw. Überschreiten der Höchstgrenze der Ladegebühr keine Verlängerungsnachricht übersendet, wenn ein zweiter Nutzer die Ladegebühr reserviert hat. Vorteilhaft besteht hierdurch die Möglichkeit, einem zweiten Nutzer (Folgenutzer) die Reservierung einer gegenwärtig von einem ersten Nutzer genutzten Ladestation zu erlauben. Da der erste Nutzer nicht die Möglichkeit hat, den Ladevorgang nachträglich zu verlängern, kann sichergestellt werden, dass die Ladestation dem zweiten Nutzer rechtzeitig bei seiner Ankunft dort bzw. zeitnah zur Verfügung gestellt werden kann.

Nach einer Weiterbildung der Erfindung erhält der die Ladestation nutzende erster Nutzer von der Serviceeinheit nach Erhalt der Reservierungsnachricht des zweiten Nutzers die Verlängerungsanfragenachricht. Beispielsweise erhält der zweite Nutzer eine Absage auf seine Reservierungsnachricht, wenn der erste Nutzer den Ladevorgang auf die Verlängerungsanfragenachricht hin fortsetzt. Vorteilhaft erhält der erste Nutzer die Chance, die Ladestation trotz Reservierungsnachricht eines zweiten Nutzers über die Höchstgrenze bzw. die Ladeendzeit hinaus zu nutzen. Hierdurch kann der erste Nutzer insbesondere auf unvorhergesehene Verzögerungen besser reagieren.

Nach einer Weiterbildung der Erfindung wird der Nutzer über Preisänderungen, welche sich während des Ladevorgangs ergeben, mittels einer von der Serviceeinheit bzw. der Ladestation an den Nutzer gesandten Preisänderungsrichtung informiert. Der Nutzer kann den Ladevorgang mittels einer Rückantwortnachricht fortsetzen, sofern er die Preisänderung akzeptiert, oder unterbrechen bzw. beenden, sofern er die Preisänderung ablehnt. Vorteilhaft bietet sich hierdurch insbesondere für den Betreiber die Möglichkeit, durch ein aktives Lastmanagement die Netzlast zu optimieren und auf Preisschwankungen bei den Strombeschaffungskosten kurzfristig zu reagieren. Der Nutzer kann hierbei in Form von Preissenkungen profitieren und erhält die Möglichkeit, unerwünschte Preissteigerungen abzulehnen. Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1a bis 1c: ein Ausführungsbeispiel des erfindungsgemäßen Verfahrens zum Speisen eines Energiespeichers eines elektrisch betreibbaren Fahrzeugs mit elektrischer Energie,
- Figur 2: eine erste Alternative von das Verfahren gemäß der Figuren 1a bis 1c erweiternden Verfahrensschritten und
- Figur 3: eine zweite Alternative von das Verfahren gemäß der Figuren 1a bis 1c erweiternden Verfahrensschritten.

Zum Einspeisen von elektrischer Energie in einen Energiespeicher elektrisch betreibbarer Fahrzeuge werden in zunehmender Weise Ladestationen an öffentlich zugänglichen Orten (beispielsweise auf Parkplätzen, entlang eines zum Parken freigegebenen Seitenstreifens von Fahrwegen oder in Parkhäusern) aufgestellt. Diese Ladestationen werden von einem kommerziellen Betreiber bewirtschaftet und über ein - vorzugsweise unterirdisch verlegtes - elektrisches Verbindungskabel mit dem elektrischen Energienetz verbunden. Der Betreiber übernimmt die Aufgabe, die elektrische Energie bedarfsgerecht an einen Nutzer des elektrisch betreibbaren Fahrzeugs abzugeben und die in den Energiespeicher des elektrisch betreibbaren Fahrzeugs eingespeiste Energiemenge mit dem Nutzer abzurechnen.

Im Gegensatz zum Betanken eines konventionellen Fahrzeugs mit fossilen Brennstoffen erfolgt das Laden des Energiespeichers elektrisch betreibbarer Fahrzeuge über einen längeren Zeitraum. Der Ladevorgang kann sich hierbei über mehrere Stunden erstrecken. Zum Laden des Energiespeichers wird dieser über ein Ladekabel elektrisch und mechanisch mit der Ladestation verbunden. Das Ladekabel weist hierzu wenigstens ein Steckelement auf, welches in ein Gegensteckelement der Ladestation eingesetzt werden kann. Fahrzeugseitig kann das Ladekabel fest mit dem Energiespeicher des Fahrzeugs verbunden sein. Vorzugsweise wird das Ladekabel jedoch auch fahrzeugseitig lösbar mit dem Fahrzeug verbunden. Zu diesem Zweck weist auch das Fahrzeug ein Gegensteckelement und das Ladekabel an seinen beiden Enden ein Steckelement auf.

Typischerweise ist eine Vielzahl von verteilt aufgestellten Ladestationen eines Betreibers mit einer zentralen Serviceeinheit verbunden, die datentechnisch mit den Ladestationen verbunden ist. Der Serviceeinheit kommt die Aufgabe zu, mit dem Nutzer einerseits und den Ladestationen andererseits zu kommunizieren und die zur Freigabe des Ladevorgangs, der Autorisierung bzw. Identifizierung des Nutzers mittels Datenbankabgleich notwendige Verfahrensschritte zu koordinieren. Die Kommunikation zwischen Serviceeinheit und Ladestation kann hierbei direkt oder indirekt, d.h. über ein Netzwerk bzw. zwischengeschaltete Sende- und Empfangsmodule, insbesondere auch über den Nutzer selbst, erfolgen.

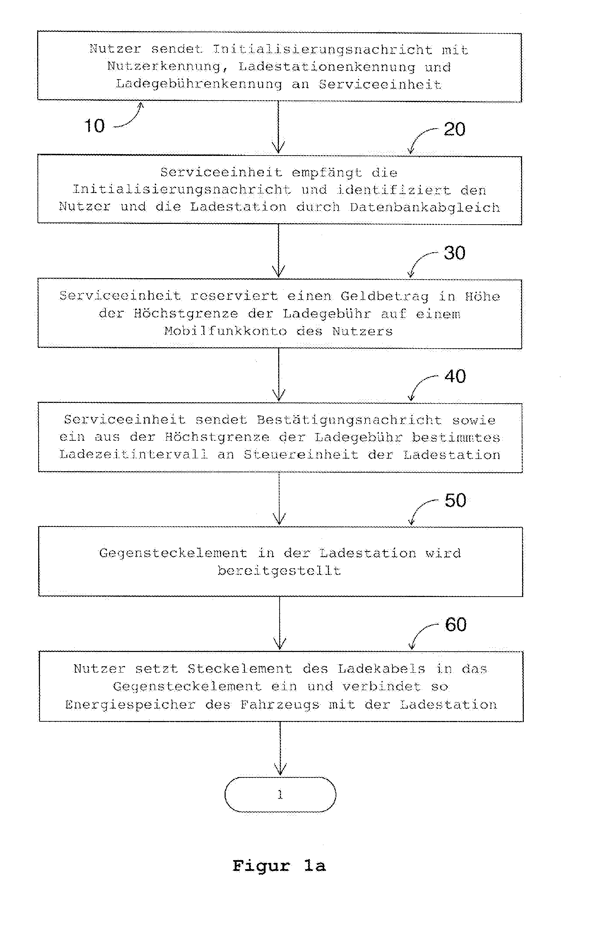

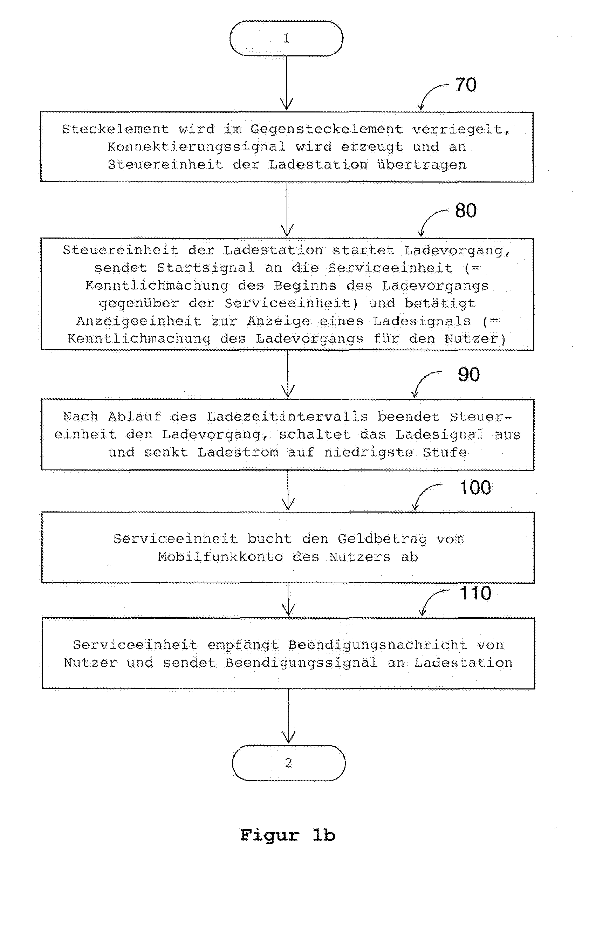

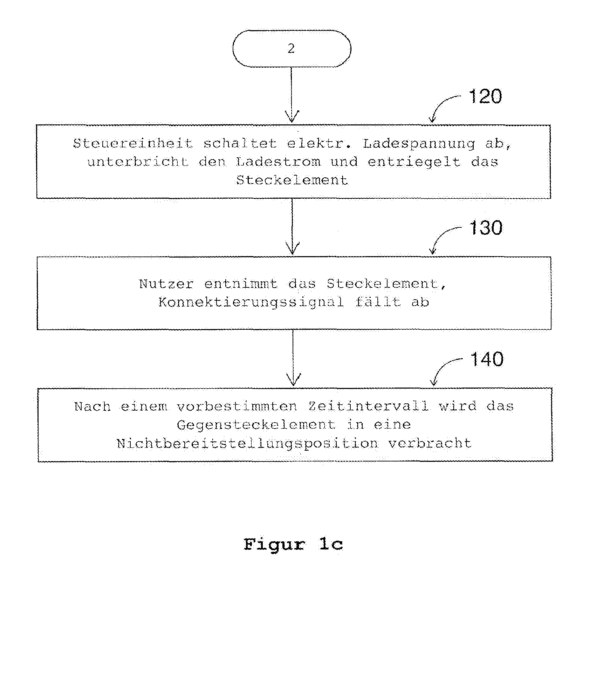

Zur Initialisierung und Durchführung des Ladevorgangs nach einem Verfahren gemäß der Figuren 1a bis 1c wird wie folgt vorgegangen. In einem ersten Verfahrensschritt 10 sendet der Nutzer eine Initialisierungsnachricht mit einer Nutzerkennung, eine Ladestationenkennung und einer Ladegebührenkennung an eine Serviceeinheit. Die Nutzerkennung dient dazu, den Nutzer eindeutig zu identifizieren. Als Nutzerkennung kann beispielsweise eine Identifikationsnummer verwendet werden, die der Nutzer im Vorfeld des Ladevorgangs während einer Registrierung bei dem Betreiber der Ladestation von demselben erhalten hat. Ferner kann als Nutzerkennung eine einmalig vergebene und dem Nutzer eindeutig zuordnenbare Zeichenkette, beispielsweise eine Sozialversicherungsnummer oder Steuernummer des Nutzers, verwendet werden. Beispielsweise kann als Nutzerkennung eine Mobiltelefonnummer des Nutzers dienen. Dies bietet sich insbesondere dann an, wenn die Initialisierungsnachricht von einem Mobiltelefon an der Serviceeinheit des Betreibers der Ladestation gesendet wird. Der Nutzer wird von diesem Fall von der manuellen Eingabe der Benutzerkennung entlastet, da die Telefonnummer während des Telefonats ohne dessen Zutun übermittelt werden kann.

Als Ladestationenkennung kann eine an der Ladestation selbst angebrachte, einmalig vergebene Kennziffer dienen. Die Kennziffer kann beispielsweise zugleich eine Telefonnummer darstellen, unter der der Nutzer die Serviceeinheit erreichen kann. Auch wenn die Ladestationenkennung als Telefonnummer ausgebildet ist, ist die Ladestationenkennung und damit auch die Telefonnummer einmalig. Hierdurch ist gewährleistet, dass anhand der Telefonnummer, unter der der Nutzer die Serviceeinheit des Betreibers anruft, die Ladestation eindeutig identifizierbar ist.

Als Ladegebührenkennung kann beispielsweise ein Geldbetrag, beispielsweise der Wert 0,50 €, 1,00 € oder 1,50 € an die Serviceeinheit übermittelt werden. Die Ladegebührenkennung spezifiziert den maximalen Geldwert, für den elektrische Energie in den Energiespeicher des Fahrzeugs eingespeist werden soll. Um den Nutzer die Wahl zu lassen, können unterschiedliche Ladegebührenkennungen mit unterschiedlichen Geldbeträgen - beispielsweise in tabellarischer Form - auf der Ladestation sichtbar dargeboten werden. Als Ladegebührenkennung kann ferner ein zu einem Geldbetrag korrespondierendes Kürzel an die Serviceeinheit übermittelt werden. Das Kürzel kann im einfachsten Fall aus einem Buchstaben oder aus einem Zahlenwert bestehen. Beispielsweise kann der Buchstabe "A" einem Geldwert von 0,50 €, der Buchstabe "B" einem Geldwert von 1,00 €, der Buchstabe "C" einem Geldwert von 1,50 € ... entsprechen.

Durch das Vorsehen eines Kürzels anstatt einer konkreten Geldbetragsangabe als Ladegebührenkennung kann die Eingabe der Ladegebührenkennung vereinfacht und einer Fehleingabe beispielsweise durch Verschieben oder Vergessen eines Kommas vorgebeugt werden.

In einem weiteren Verfahrensschritt 20 empfängt die Serviceeinheit die Initialisierungsnachricht des Nutzers. Auf Basis der Initialisierungsnachricht des Nutzers wird derselbe durch einen Vergleich der Nutzerkennung mit in einer Datenbank gespeicherten Vergleichsdaten identifiziert. Ebenfalls wird durch einen Datenbankabgleich die Ladestation anhand der Ladestationenkennung und auf Basis der Ladegebührenkennung der Höchstbetrag der Ladegebühr identifiziert.

In einem weiteren Verfahrensschritt 30 reserviert die Serviceeinheit einen Geldbetrag in Höhe der Höchstgrenze der Ladegebühr auf einem Mobilfunkkonto des Nutzers. Sofern das Mobilfunkkonto des Nutzers keinen hinreichenden Deckungsbetrag aufweist, kann anstelle der Höchstgrenze der Ladegebühr ein dem Deckungsbetrag des Mobilfunkkontos des Nutzers entsprechender Geldbetrag reserviert werden. In diesem Fall bestimmt sich die Höchstgrenze der Ladegebühr nicht nach der Ladegebührenkennung, sondern nach dem Deckungsbetrag des Mobilfunkkontos des Nutzers.

Nachdem ein Geldbetrag auf dem Mobilfunkkonto des Nutzers reserviert ist, sendet die Serviceeinheit in einem weiteren Verfahrensschritt 40 eine Bestätigungsnachricht sowie in aus der Höchstgrenze der Ladegebühr bestimmtes Ladezeitintervall eine Steuereinheit der Ladestation. Die Steuereinheit der Ladestation erhält hierdurch die Information, wie lange elektrische Energie in den Energiespeicher des Fahrzeugs eingespeist werden soll.

Nach Empfang der Bestätigungsnachricht wird in einem weiteren Verfahrensschritt 50 das bei Nichtbenutzung der Ladestation verdeckt in derselben angeordnete Gegensteckelement derart bereitgestellt, dass das Gegensteckelement für den Nutzer zugänglich in der Ladestation angeordnet ist und das Steckelement des Ladekabels in das Gegensteckelement eingesetzt werden kann.

Sobald das Steckelement des Ladekabels in das Gegensteckelement der Ladestation eingesetzt ist, ist der Energiespeicher des Fahrzeugs mit der Ladestation verbunden (Verfahrensschritt 60). In einem weiteren Verfahrensschritt 70 wird das Steckelement in dem Gegensteckelement verriegelt. Nach der Verriegelung wird ein Konnektierungssignal erzeugt und an die Steuereinheit der Ladestation übertragen. Zu diesem Zeitpunkt ist das Steckelement in dem Gegensteckelement festgelegt. Das Steckelement kann weder willentlich noch versehentlich aus dem Gegensteckelement entnommen werden.

In einem weiteren Verfahrensschritt 80 startet die Steuereinheit der Ladestation den Ladevorgang und sendet ein den Beginn des Ladevorgangs indizierendes Startsignal an die Serviceeinheit. Zu diesem Zeitpunkt beginnt das Ladezeitintervall. Ferner wird zur Kenntlichmachung des Ladevorgangs an einer Anzeigeeinheit der Ladestation ein Ladesignal angezeigt. Hierzu kann beispielsweise ein Lichtsignal erzeugt, eine LED-Anzeige aktiviert oder eine entsprechende Nachricht auf einem Display der Ladestation angezeigt werden.

In einem weiteren Verfahrensschritt 90 wird nach Ablauf des Ladezeitintervalls der Ladevorgang durch die Steuereinheit der Ladestation beendet. Die Steuereinheit schaltet das Ladesignal aus und senkt den Ladestrom auf eine niedrigste Stufe. Indem der Ladestrom nicht ausgeschaltet, sondern auf eine niedrigste Stufe abgesenkt wird, kann die Fahrzeugbatterie konditioniert und/oder das Fahrzeug vorkonditioniert werden.

Ebenfalls nach Ablauf des Ladezeitintervalls bucht die Serviceeinheit den reservierten Geldbetrag von dem Mobilfunkkonto des Nutzers ab (Verfahrensschritt 100). Wahlweise kann der Ablauf des Ladezeitintervalls in der Serviceeinheit separat überwacht oder von der Steuereinheit ein entsprechendes Benachrichtigungssignal an die Serviceeinheit übersandt werden.

Obwohl der Ladevorgang des Energiespeichers beendet ist, bleibt der Energiespeicher über das Ladekabel mit der Ladestation verbunden. Erst wenn in einem weiteren Verfahrensschritt 110 die Serviceeinheit eine Beendigungsnachricht vom Nutzer empfängt, sendet die Serviceeinheit ein Beendigungssignal an die Ladestation. In einem nachgelagerten Verfahrensschritt 120 schaltet die Steuereinheit der Ladestation die elektrische Ladespannung vollständig ab, unterbricht den Ladestrom und entriegelt das bis zu diesem Zeitpunkt in dem Gegensteckelement festgelegte Steckelement.

In einem weiteren Verfahrensschritt 130 kann der Nutzer das Steckelement aus dem Gegensteckelement der Ladestation entnehmen. Zu diesem Zeitpunkt fällt das Konnektierungssignal ab. Nach einem vorbestimmten Zeitintervall nach dem Abfall des Konnektierungssignals wird in einem weiteren Verfahrensschritt 140 das Gegensteckelement aus der Bereitstellungsposition in eine Nichtbereitstellungsposition verbracht.

In einem nachgelagerten nicht dargestellten Verfahrensschritt kann von der Steuereinheit der Ladestation ein Freigabesignal an die Serviceeinheit übersandt werden. Aus dem Freigabesignal schließt die Serviceeinheit, dass das Steckelement aus dem Gegensteckelement entnommen wurde, dass das Gegensteckelement ordnungsgemäß in die Nichtverwendungsposition verbracht wurde und dass die Ladestation nicht mehr belegt ist.

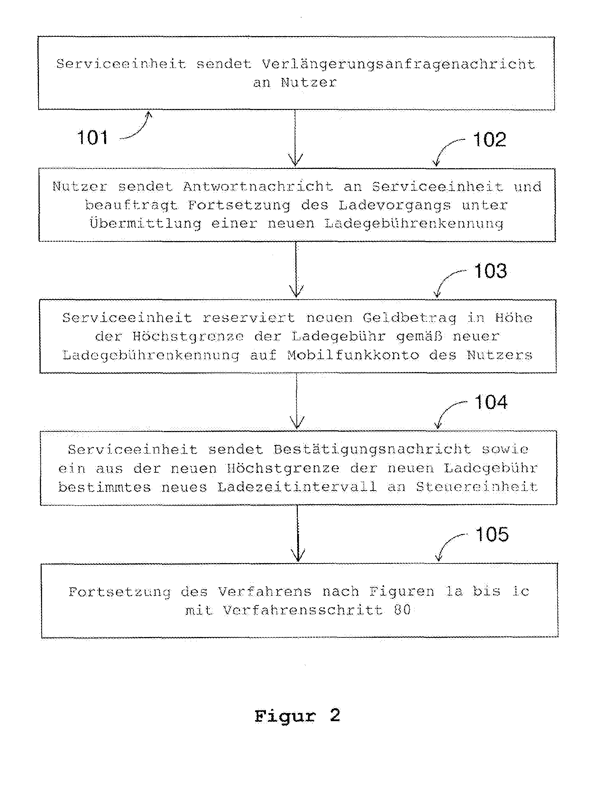

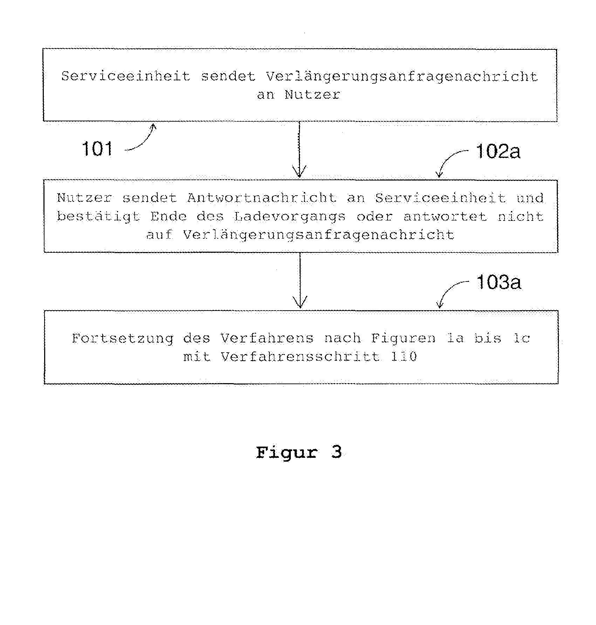

Optional können nach dem Verfahrensschritt 100 weitere alternative Verfahrensschritte gemäß der Figuren 2 und 3 ausgeführt werden. Die alternativen Verfahrensschritte dienen dazu, dem Nutzer nach der Beendigung des Ladevorgangs die Möglichkeit zur weiteren Aufladung des Energiespeichers seines Fahrzeugs zu eröffnen. Nach einer Verfahrensalternative gemäß Figur 2 wird hierzu in einem an den Verfahrensschritt 100 anschließenden weiteren Verfahrensschritt 101 eine Verlängerungsanfragenachricht von der Serviceeinheit an den Nutzer gesandt, sobald das ursprüngliche Ladezeitintervall abgelaufen, der Ladevorgang beendet und der Geldbetrag vom Mobilfunkkonto des Nutzers abgebucht ist.

Der Nutzer sendet zur Verlängerung des Ladevorgangs in einem weiteren Verfahrensschritt 102 eine Antwortnachricht an die Serviceeinheit und beauftragt so die Fortsetzung des Ladevorgangs. Mit der Antwortnachricht übermittelt der Nutzer eine neue Ladegebührenkennung, aus der eine neue Höchstgrenze für die neue Ladegebühr übermittelt wird.

In einem weiteren Verfahrensschritt 103 reserviert die Serviceeinheit in bekannter Weise den Geldbetrag in Höhe der neuen Höchstgrenze der neuen Ladegebühr bzw. der verbleibenden Kontodeckung auf dem Mobilfunkkonto des Nutzers und sendet - im Verfahrensschritt 104 - eine Bestätigungsnachricht sowie ein neues, aus der neuen Höchstgrenze der neuen Ladegebühr bestimmtes Ladezeitintervall an die Steuereinheit der Ladestation. Im Verfahrensschritt 105 wird das Verfahren nach den Figuren 1a bis 1c mit dem dortigen Verfahrensschritt 80 fortgeführt.

Sofern der Nutzer den Ladevorgang auf die im Verfahrensschritt 101 übersandte Verlängerungsanfragenachricht nicht fortsetzen möchte, sendet der Nutzer im Verfahrensschritt 102a zur Bestätigung des Endes des Ladevorgangs eine Antwortnachricht an die Serviceeinheit oder antwortet nicht auf die Verlängerungsanfragenachricht vgl. Figur 3. Im Verfahrensschritt 103a wird das Verfahren nach den Figuren 1a bis 1c mit dem Verfahrensschritt 110 fortgesetzt.

Nach einer alternativen, nicht dargestellten Ausführungsform der Erfindung kann ein modifiziertes Abrechnungsverfahren zur Anwendung kommen. Bei dem modifizierten Abrechnungsverfahren wird das Mobilfunkkonto des Nutzers lediglich einmalig mit einem Geldbetrag belastet. Der Geldbetrag bestimmt sich hierbei der Höhe nach aus der Summe der Geldbeträge nach dem Verfahren gemäß Figuren 1a bis 1c und einer beliebigen Anzahl von neuen Geldbeträgen nach dem Fortsetzungsverfahren gemäß der Figur 2. Die Verlängerungsanfragenachricht wird hierbei nur dann an den Nutzer gesandt, wenn das Mobilfunkkonto nach Abschluss des vorangegangenen Ladevorgangs noch eine hinreichende Deckung, spezifiziert beispielsweise durch ein vom Betreiber festlegbaren Mindestgeldbetrag, aufweist. Sofern das Mobilfunkkonto des Nutzers den Mindestgeldbetrag nicht aufweist, wird eine Verlängerungsanfragenachricht an den Nutzer nicht versandt und stattdessen der Ladevorgang endgültig beendet und das Mobilfunkkonto des Nutzers belastet.

Sofern der Ladevorgang von Seiten des Nutzers abgebrochen wird, bevor das Ladezeitintervall abgelaufen oder eine vorausbestimmte Energiemenge in den Energiespeicher des Fahrzeugs eingespeist wurde, wird vom Nutzer eine Abbuchnachricht an die Serviceeinheit des Betreibers gesendet. Nach Empfang der Abbruchnachricht wird der Ladevorgang beendet, der bis dahin angefallene Geldbetrag sowie optional eine zusätzliche Abbruchgebühr dem Mobilfunkkonto des Nutzers belastet und das Steckelement entriegelt. Der Nutzer kann sodann das Steckelement aus dem Gegensteckelement der Ladestation entnehmen.

## Patentansprüche

1. Verfahren zur Einspeisung von elektrischer Energie in einen Energiespeicher eines elektrisch betreibbaren Fahrzeugs mittels einer elektrische Energie bereitstellenden stationären Ladestation, wobei
- ein Nutzer der Ladestation eine Initialisierungsnachricht enthaltend eine den Nutzer identifizierende Nutzerkennung und eine die Ladestation identifizierende Ladestationenkennung an eine Serviceeinheit eines Betreibers der Ladestation sendet,
- nach der Identifikation des Nutzers und der Ladestation von der Serviceeinheit ein die erfolgreiche Initialisierung bestätigendes Bestätigungssignal von der Serviceeinheit an die Ladestation gesendet wird zur Freigabe der Ladestation,
- der Nutzer die Ladestation und den Energiespeicher des Fahrzeugs über ein Ladekabel mechanisch und/oder elektrisch verbindet,
- nach der Verbindung von Fahrzeug und Ladestation und nach Empfang des Bestätigungssignals durch die Ladestation ein den Beginn des Ladevorgangs kennzeichnendes Startsignal von der Ladestation an die Serviceeinheit gesendet wird und zur Durchführung eines Ladevorgangs eine elektrische Ladespannung angelegt und der Energiespeicher mit dem Ladestrom geladen wird und
- der Nutzer zur Abrechnung des Ladevorgangs mit einer Ladegebühr belastet wird,
**dadurch gekennzeichnet,**
- **dass** der Nutzer zur Festlegung einer Höchstgrenze der Ladegebühr eine die Höchstgrenze der Ladegebühr spezifizierende Ladegebührenkennung an die Serviceeinheit sendet und
- **dass** der Ladevorgang unterbrochen und/oder beendet wird, sobald die Höchstgrenze der Ladegebühr erreicht und/oder überschritten ist.

2. Verfahren nach Anspruch 1, **dadurch gekennzeichnet, dass**
- als Ladegebührenkennung eine Geldbetragsangabe und/oder ein zu einem Geldbetrag korrespondierendes Kürzel und/oder eine zu einer in den Energiespeicher des Fahrzeugs einzuspeisenden Energiemenge korrespondierende Wertzahl und/oder eine Zeitangabe, welche eine Höchstdauer des Ladevorgangs spezifiziert, von dem Nutzer an die Serviceeinheit gesendet wird, und/oder
- dass die Ladegebührenkennung als weiterer Teil der Identifikationsnachricht von dem Nutzer an die Serviceeinheit gesendet wird.

3. Verfahren nach Anspruch 1 oder 2, **dadurch gekennzeichnet, dass** zur Bestimmung der in den Energiespeicher des Fahrzeugs eingespeisten Energiemenge und/oder der Ladegebühr die Dauer des Ladevorgangs gemessen wird.

4. Verfahren nach einem der Ansprüche 1 bis 3, **dadurch gekennzeichnet, dass** zur Unterbrechung und/oder Beendigung des Ladevorgangs beim Erreichen der Höchstgrenze der Ladegebühr
- ein Stoppsignal nach Ablauf eines zu der Höchstgrenze der Ladegebühr korrelierenden Zeitintervalls, welches mit einem Beginn des Ladevorgangs startet, von der Serviceeinheit an die Ladestation gesendet wird, oder
- die Ladegebührenkennung selbst oder eine zu der Höchstgrenze der Ladegebührenkennung korrespondierende Wertangabe vor der Durchführung des Ladevorgangs von der Serviceeinheit an eine Steuereinheit der Ladestation gesendet wird, so dass das Stoppsignal auf Basis der Ladegebührenkennung oder der Wertangabe von der Steuereinheit der Ladestation selbst erzeugt wird, oder
- die Ladestation während des Ladevorgangs Informationen über die in den Energiespeicher des Fahrzeugs eingespeiste Energiemenge und/oder die Dauer des Ladevorgangs an die Serviceeinheit sendet, diese Information von Serviceeinheit verarbeitet und mit der die Höchstgrenze des Ladevorgangs spezifizierenden Ladegebührenkennung vergleicht und bei Erreichen oder Überschreiten der Höchstgrenze das Stoppsignal von der Serviceeinheit an die Ladestation gesendet wird zur Beendigung und/oder Unterbrechung des Ladevorgangs.

5. Verfahren nach einem der Ansprüche 1 bis 4, **dadurch gekennzeichnet, dass**
- der Nutzer von einem mobilen Kommunikationsgerät eine Sprachnachricht oder eine Textnachricht als Initialisierungsnachricht an die Serviceeinheit sendet, und/oder
- dass als Nutzerkennung eine Telefonnummer des Nutzers und/oder als Ladestationenkennung eine auf der Ladestation angegebene Telefonnummer genutzt wird, wobei unter der auf der Ladestation angegebenen Telefonnummer die Serviceeinheit des Betreibers kontaktiert wird, und/oder dass als Ladegebührenkennung ein auf der Ladestation dargestellter Geldbetrag an die Serviceeinheit übermittelt wird.

6. Verfahren nach einem der Ansprüche 1 bis 5, **dadurch gekennzeichnet, dass**
- vor der Durchführung des Ladevorgangs von der Serviceeinheit ein Geldbetrag in Höhe der Höchstgrenze der Ladegebühr auf einem Mobilfunkkonto des Nutzers, welches dieser bei einem Mobilfunkbetreiber unterhält, reserviert wird und dass beim Start des Ladevorgangs und/oder nach der Beendigung des Ladevorgangs und/oder bei Unterbrechung des Ladevorgangs ein zu der in dem Energiespeicher des Fahrzeugs eingespeisten Energiemenge und/oder zu der Ladezeit korrelierender Rechnungsbetrag, welcher kleiner oder gleich der von dem Nutzer spezifizierten Höchstgrenze der Ladegebühr ist, dem Mobilfunkkonto des Nutzers belastet wird, und/oder
- dass dem Nutzer zusätzlich zu der Ladegebühr für das Abstellen des Fahrzeugs eine Parkgebühr berechnet wird, wobei eine erste Zeitperiode, für die die Parkgebühr berechnet wird, von einer zweiten Zeitperiode abweichen kann, für die die Ladegebühr berechnet wird.

7. Verfahren nach einem der Ansprüche 1 bis 6, **dadurch gekennzeichnet, dass** während der Dauer des Ladevorgangs von einer Anzeigeeinheit ein die Durchführung des Ladevorgangs kenntlich machendes Ladesignal angezeigt wird.

8. Verfahren nach einem der Ansprüche 1 bis 7, **dadurch gekennzeichnet, dass** Standorte von Ladestationen in einem Navigationsgerät angezeigt werden und dass bei der Anzeige der Standorte für jede Ladestation kenntlich gemacht wird, ob diese aufgrund eines aktuell durchgeführten und/oder bevorstehenden Ladevorgangs belegt ist.

9. Verfahren nach einem der Ansprüche 1 bis 8 **dadurch gekennzeichnet, dass** der Nutzer zur Reservierung einer in dem Navigationsgerät angezeigten, aktuell oder zu einem voraussichtlichen Ankunftszeitpunkt nicht belegten und von dem Nutzer ausgewählten Ladestation eine Reservierungsnachricht enthaltend die Nutzerkennung und die Ladestationenkennung sowie optional die Ladegebührenkennung an die Serviceeinheit übersendet, woraufhin von der Serviceeinheit eine Sperrnachricht an die ausgewählte Ladestation gesendet wird, die Anzeigeeinheit der Ladestation ein die Reservierung der ausgewählten Ladestation kenntlich machendes Sperrsignal anzeigen kann, die von dem Nutzer ausgewählte Ladestation aufgrund des bevorstehenden Ladevorgangs in dem Navigationsgerät als belegt kenntlich gemacht wird und dem Nutzer für ein Reservierungszeitintervall zwischen der Reservierung der Ladestation und dem Beginn der Durchführung des Ladevorgangs die Parkgebühr und/oder eine Reservierungsgebühr berechnet wird.

10. Verfahren nach einem der Ansprüche 1 bis 9, **dadurch gekennzeichnet, dass** der Nutzer beim Erreichen der von ihm reservierten Ladestation die Initialisierungsnachricht oder eine Aktivierungsnachricht an die Serviceeinheit sendet, wobei von der Serviceeinheit nach Erhalt der Aktivierungsnachricht das Bestätigungssignal an die Ladestation gesendet wird.

11. Verfahren nach einem der Ansprüche 1 bis 10, **dadurch gekennzeichnet, dass** an den Nutzer vor, bei oder nach Erreichen der Höchstgrenze der Ladegebühr eine Verlängerungsanfragenachricht von der Serviceeinheit gesendet wird und dass der Nutzer durch eine Antwortnachricht den Ladevorgang entweder endgültig beenden oder fortsetzen kann, wobei der Nutzer bei der Fortsetzung des Ladevorgangs für den folgenden Ladevorgang eine neue Ladegebührenkennung an die Serviceeinheit übermittelt.

12. Verfahren nach einem der Ansprüche 1 bis 11, **dadurch gekennzeichnet, dass** auf ein von der Serviceeinheit an die Ladestation übersandte Steuersignal hin oder nach der Beendigung und/oder Unterbrechung des Ladevorgangs bis zum Empfang eines Beendigungssignals durch die Steuereinheit der Ladestation die elektrische Spannung angelegt bleibt und der Ladestrom auf eine niedrige Stufe abgesenkt wird.

13. Verfahren nach einem der Ansprüche 1 bis 12, **dadurch gekennzeichnet, dass** von der Ladestation und/oder von der Serviceeinheit eine Ausfallnachricht an den Nutzer übersandt wird, sofern der Ladevorgang vor dem Erreichen der Höchstgrenze der Ladegebühr unvorhergesehen unterbrochen wird.

14. Verfahren nach einem der Ansprüche 1 bis 13, **dadurch gekennzeichnet, dass**
- ein die Ladestation nutzender erster Nutzer nach dem Erreichen und/oder Überschreiten der Höchstgrenze der Ladegebühr keine Verlängerungsanfragenachricht erhält, wenn ein zweiter Nutzer die Ladestation reserviert hat, und/oder
- dass der die Ladestation nutzende erster Nutzer von der Serviceeinheit nach Erhalt der Reservierungsnachricht des zweiten Nutzers die Verlängerungsanfragenachricht erhält, und/oder
- dass der zweite Nutzer eine Absage auf seine Reservierungsnachricht erhält, wenn der erste Nutzer auf die Verlängerungsanfragenachricht hin den Ladevorgang fortsetzt.

15. Verfahren nach einem der Ansprüche 1 bis 14, **dadurch gekennzeichnet, dass** der Nutzer über Preisänderungen, welche sich während des Ladevorgangs ergeben, mittels einer von der Serviceeinheit und/oder der Ladestation an den Nutzer gesendete Preisänderungsnachricht informiert wird und mittels einer Rückantwortnachricht den Ladevorgang bei Akzeptanz der Preisänderung fortsetzen oder bei Ablehnung der Preisänderung unterbrechen oder beenden kann.

16. Vorrichtung zur Durchführung des Verfahrens nach einem der Ansprüche 1 bis 15.
